(19) Europäisches Patentamt
European Patent Office
Office européen des brevets

(11) **EP 3 803 679 B1**

(12) **EUROPÄISCHE PATENTSCHRIFT**

(45) Veröffentlichungstag und Bekanntmachung des Hinweises auf die Patenterteilung:
**24.07.2024 Patentblatt 2024/30**

(21) Anmeldenummer: **19717859.3**

(22) Anmeldetag: **11.04.2019**

(51) Internationale Patentklassifikation (IPC):
**G06V 20/58** (2022.01) **G06V 10/25** (2022.01)
**G06V 40/10** (2022.01)

(52) Gemeinsame Patentklassifikation (CPC):
**G06V 40/103; G06V 10/25; G06V 20/58**

(86) Internationale Anmeldenummer:
**PCT/EP2019/059280**

(87) Internationale Veröffentlichungsnummer:
**WO 2019/223933 (28.11.2019 Gazette 2019/48)**

(54) **BETRIEBSASSISTENZVERFAHREN, STEUEREINHEIT, BETRIEBSASSISTENZSYSTEM UND ARBEITSVORRICHTUNG**

OPERATING ASSISTANCE METHOD, CONTROL UNIT, OPERATING ASSISTANCE SYSTEM AND WORK APPARATUS

PROCÉDÉ D'ASSISTANCE AU FONCTIONNEMENT, UNITÉ DE COMMANDE, SYSTÈME D'ASSISTANCE AU FONCTIONNEMENT ET DISPOSITIF DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.05.2018 DE 102018208278**

(43) Veröffentlichungstag der Anmeldung:
**14.04.2021 Patentblatt 2021/15**

(73) Patentinhaber: **Robert Bosch GmbH**
**70442 Stuttgart (DE)**

(72) Erfinder:
• **BRUEGGERT, Steffen**
**31141 Hildesheim (DE)**
• **ROEDER, Jens**
**70435 Stuttgart (DE)**
• **KESSLER, Michael**
**71229 Leonberg (DE)**
• **KOEGEL, Patrick**
**71636 Ludwigsburg (DE)**

(56) Entgegenhaltungen:
**US-A1- 2018 107 883**

• **KELLER CHRISTOPH G ET AL: "Will the Pedestrian Cross? A Study on Pedestrian Path Prediction", IEEE TRANSACTIONS ON INTELLIGENT TRANSPORTATION SYSTEMS, IEEE, PISCATAWAY, NJ, USA, vol. 15, no. 2, 1 April 2014 (2014-04-01), pages 494 - 506, XP011544920, ISSN: 1524-9050, [retrieved on 20140408], DOI: 10.1109/TITS.2013.2280766**
• **JUNFENG GE ET AL: "Real-Time Pedestrian Detection and Tracking at Nighttime for Driver-Assistance Systems", IEEE TRANSACTIONS ON INTELLIGENT TRANSPORTATION SYSTEMS, IEEE, PISCATAWAY, NJ, USA, vol. 10, no. 2, 1 June 2009 (2009-06-01), pages 283 - 298, XP011347179, ISSN: 1524-9050, DOI: 10.1109/TITS.2009.2018961**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die vorliegende Erfindung betrifft ein Betriebsassistenzsystem für eine Arbeitsvorrichtung oder für ein Fahrzeug, eine Steuereinheit für ein Betriebsassistenzsystem einer Arbeitsvorrichtung, ein Betriebsassistenzsystem als solches sowie eine Arbeitsvorrichtung und insbesondere ein Fahrzeug.

Bei Arbeitsvorrichtungen und insbesondere im Fahrzeugbereich kommen vermehrt Betriebsassistenzsysteme und -verfahren zum Einsatz, welche das Umfeld der jeweiligen Vorrichtung im Hinblick auf mögliche Kollisionen mit Objekten untersuchen und entsprechende Warnmeldungen ausgeben und/oder in den Betrieb der Vorrichtung eingreifen sollen. Bei bekannten Systemen und Verfahren kommen vergleichsweise komplexe Systeme und Datenstrukturen, zum Beispiel mit der Auswertung dreidimensionaler Daten, zum Einsatz und/oder die Aussagekraft der entsprechenden Bewertungen des Umfelds sind für einen Eingriff in den Betrieb der Vorrichtung, zum Beispiel für eine Bremsentscheidung, nicht ausreichend.

Die Schrift Keller, Chritoph G et al.: "Will the Pedestrian Cross? A Study on Pedestrian Path Prediction" (IEEE TRANS ON INTELLIGENT TRANSPORTATION SYSTEMS, Bd. 15, Nr. 2, April 2014, Seiten 494-506, XP011544920, ISSN: 1524-9050, DOI: 10.1 109/TITS.2013.2280766) offenbart eine Vorhersage eines Fußgängerweges für ein Fahrsystem eines Fahrzeugs zur Fußgängersicherheit.

Das Dokument Junfeng, Ge et al.: "Real-Time Pedestrian Detection and Tracking at Nighttime for Driver-Assistance Systems" (IEEE TRANS ON INTELLIGENT TRANSPORTATION SYSTEMS, Bd. 10, Nr. 2, Juni 2009, Seiten 283-298, XP011347179, ISSN: 1524-9050, DOI: 10.1109/TITS.2009.2018961) offenbart eine Fußgängererkennung und deren Verfolgung in Echtzeit für Fahrassistenzsysteme.

Offenbarung der Erfindung

Das erfindungsgemäße Betriebsassistenzverfahren mit den Merkmalen des Anspruchs 1 weist demgegenüber den Vorteil auf, dass für den Betrieb einer Arbeitsvorrichtung mit vergleichsweise einfachen Mitteln eine besonders zuverlässige Kollisionsprognose erstellt werden kann. Dies wird erfindungsgemäß mit den Merkmalen des Anspruchs 1 dadurch erreicht, dass ein Betriebsassistenzverfahren für eine Arbeitsvorrichtung und insbesondere für ein Fahrzeug geschaffen wird, bei welchem

(S1)	Objektboxen zu einem Objekt in einem Sichtfeld der Arbeitsvorrichtung zu aufeinanderfolgenden Zeitpunkten oder derartige Objektboxen charakterisierende Daten erhalten werden,

(S2)	aus Objektboxen eines gegebenen Objekts zu aufeinanderfolgend oder direkt aufeinanderfolgend aufgenommenen Bildern eine momentane Skalierungsänderung oder Skalenänderung einer Objektbox zum jeweiligen Objekt und eine momentane laterale Positionsänderung der Objektbox zum jeweiligen Objekt bestimmt werden,

(S3)	aus der momentanen Skalierungsänderung, Skalenänderung oder daraus abgeleitete Größen und der momentanen lateralen Positionsänderung zu einer Objektbox zu einem jeweiligen Objekt eine in die Zukunft prognostizierte Objektbox bestimmt wird und

(S4)	die Position der prognostizierten Objektbox und/oder das Verhältnis einer lateralen Erstreckung der prognostizierten Objektbox zu einer lateralen Erstreckung eines erfassten Sichtfeldes und/oder der aufgenommenen Bilder bestimmt und bewertet werden und

(S5)	in Abhängigkeit vom Ergebnis der Bewertung (i) bestimmt wird, ob ein der prognostizierten Objektbox zu Grunde liegendes Objekt in Bezug auf eine mögliche Kollision kritisch ist oder nicht, und/oder (ii) ein Betriebszustand der Arbeitsvorrichtung gesteuert oder geregelt wird.

Erfindungsgemäß ist es also vorgesehen, der Bewertung des Umfelds der Arbeitsvorrichtung so genannte Objektboxen und entsprechend prognostizierte Objektboxen und deren Größenentwicklung im Verhältnis zu einem erfassten Sichtfeld zu Grunde zu legen. Diese Daten können im Wesentlichen rein zweidimensional erfasst und mit hoher Genauigkeit bestimmt werden.

Die Unteransprüche zeigen bevorzugte Weiterbildungen der Erfindung.

Grundsätzlich können die mit den Objektboxen im Zusammenhang stehenden Daten von extern bereitgestellt werden, zum Beispiel von optischen Erfassungseinheiten herkömmlicher Fahrassistenzsysteme.

Bei einer bevorzugten Ausführungsform des erfindungsgemäßen Betriebsassistenzverfahrens ist es jedoch vorgesehen, beim Schritt (S1) oder für den Schritt (S1) des Erhaltens der Objektboxen und/oder der die Objektboxen charakterisierenden Daten

(S1a)    ein Sichtfeld der zu Grunde liegenden Arbeitsvorrichtung unter Aufnahme zeitlich aufeinanderfolgender Bilder optisch zweidimensional und/oder monokular erfasst wird und

(S1b)    in aufeinanderfolgenden aufgenommenen Bildern oder Ausschnitten davon mindestens ein Objekt und eine dem Objekt zugeordnete Objektbox bestimmt werden.

Wie oben bereits erwähnt wurde, ist ein maßgeblicher Aspekt der vorliegenden Erfindung die Prognose einer erfassten Objektbox zu einem Objekt im Sichtfeld in die Zukunft. Eine derartige Prognose kann auf verschiedene Weisen ausgeführt werden.

Erfindungsgemäß wird eine in die Zukunft prognostizierte Objektbox zumindest zu einem aktuell zuletzt erfassten Bild oder zu einem Ausschnitt davon bestimmt.

Dies geschieht, indem über eine Mehrzahl von Zeitinkrementen bis zu einer Prognosezeitspanne iterativ Werte für die Skalierung oder daraus abgeleitete Größen einer jeweiligen Objektbox, für die Koordinaten einer jeweiligen Objektbox, für die Translation einer jeweiligen Objektbox und/oder für die laterale Breite einer jeweiligen Objektbox bestimmt und aktualisiert werden.

Die Prognosezeitspanne und/oder die Zeitinkremente können vorbestimmt und festgelegt sein. Es bietet sich jedoch auch an, die Prognosezeitspanne und/oder die Zeitinkremente von weiteren Betriebsparametern abhängig zu machen, zum Beispiel von einer Eigengeschwindigkeit und/oder von einer Position der Vorrichtung und insbesondere des Fahrzeugs selbst oder auch von einer zuvor prognostizierten Geschwindigkeit und/oder Position eines oder mehrerer Objekte im Umfeld der Vorrichtung insbesondere des Fahrzeugs. So kann in vorteilhafter Weise die Überwachung zeitlich engmaschiger erfolgen, wenn dies aufgrund der Anzahl der im Umfeld befindlichen Objekte und/oder auf Grund einer vergleichsweise hohen Eigengeschwindigkeit der Vorrichtung und/oder der Objekte erforderlich ist. Dagegen kann bei vergleichsweise geringem Verkehr oder ähnlichen Situationen der Überwachungsaufwand abgesenkt werden.

In diesem Zusammenhang können gemäß einer anderen Ausgestaltungsform des erfindungsgemäßen Betriebsassistenzverfahrens für jedes Zeitinkrement die folgenden Schritte - insbesondere in der angegebenen Reihenfolge - ausgeführt werden:

(I1) Rücksetzen oder Vorbesetzen der zu berechnenden Werte gemäß den Zuordnungsvorschriften

$$\text{Skalierung}_{alt} \quad := \text{Skalierung}_{neu}$$
$$\text{BoxTranslationX}_{alt} \quad := \text{BoxTranslationX}_{neu}$$
$$\text{BoxBreite}_{alt} \quad := \text{BoxBreite}_{neu}$$
$$\text{BoxPositionLinks}_{alt} \quad := \text{BoxPositionLinks}_{neu}$$
$$\text{BoxPositionRechts}_{alt} \quad := \text{BoxPositionRechts}_{neu},$$

(I2) Aktualisieren der Skalierung gemäß der nachfolgenden Zuordnungsvorschrift

$$\text{Skalierung}_{neu} := 1 / (2 - \text{Skalierung}_{alt})$$

(I3) Aktualisieren der horizontalen oder lateralen Objektboxtranslation gemäß der nachfolgenden Zuordnungsvorschrift

$$\text{BoxTranslationX}_{neu} := \text{BoxTranslationX}_{alt} \times \text{Skalierung}_{alt}$$

(I4) Aktualisieren der horizontalen oder lateralen Objektboxbreite gemäß der nachfolgenden Zuordnungsvorschrift

$$\text{BoxBreite}_{neu} := \text{BoxPositionRechts}_{alt} - \text{BoxPositionLinks}_{alt}$$

(I5) Prädizieren der horizontalen oder lateralen Boxpositionen gemäß den nachfolgenden Zuordnungsvorschriften

$$\text{BoxPositionLinks}_{neu} := \text{BoxPositionLinks}_{alt} + \text{BoxTranslationX}_{neu} - 0.5 \times \text{BoxBreite}_{neu} \times (\text{Skalierung}_{neu} - 1) / \text{Skalierung}_{neu}$$

$$\text{BoxPositionRechts}_{\text{neu}} := \text{BoxPositionRechts}_{\text{alt}} + \text{BoxTranslationX}_{\text{neu}} + 0.5 \times \text{BoxBreite}_{\text{neu}} \times (\text{Skalierung}_{\text{neu}} - 1) / \text{Skalierung}_{\text{neu}},$$

wobei $\text{Skalierung}_{\text{alt}}$, $\text{Skalierung}_{\text{neu}}$ die alte bzw. die neue Skalierung einer Objektbox, $\text{BoxTranslationX}_{\text{alt}}$, $\text{BoxTranslationX}_{\text{neu}}$ die alte bzw. die neue Verschiebung einer Objektbox, $\text{BoxBreite}_{\text{alt}}$, $\text{BoxBreite}_{\text{neu}}$ die alte bzw. die neue Breite einer Objektbox, $\text{BoxPositionLinks}_{\text{alt}}$, $\text{BoxPositionLinks}_{\text{neu}}$ die alte bzw. die neue Position der linken unteren Ecke einer Objektbox (52) als erste x-Koordinate der jeweiligen Objektbox sowie $\text{BoxPositionRechts}_{\text{alt}}$, $\text{BoxPositionRechts}_{\text{neu}}$ die alte bzw. die neue Position der rechten unteren Ecke einer Objektbox als zweite x-Koordinate der jeweiligen Objektbox bzw. deren Werte bezeichnen.

Alternativ oder zusätzlich können die oben genannten Gleichungen ersetzt oder ergänzt werden durch die nachfolgende Berechnungsvorschriften

$$\text{BoxPositionLinks}_{\text{neu}} := (\text{BoxPositionLinks}_{\text{aktuell}} + \text{BoxGeschwindigkeitLinks}_{\text{aktuell}} * T_{\text{Prädiktion}})/(1 + \text{NormGeschwindigkeit}_{\text{aktuell}} * T_{\text{Prädiktion}})$$

und

$$\text{BoxPositionRechts}_{\text{neu}} := (\text{BoxPositionRechts}_{\text{aktuell}} + \text{BoxGeschwindigkeitRechts}_{\text{aktuell}} * T_{\text{Prädiktion}})/(1 + \text{NormGeschwindigkeit}_{\text{aktuell}} * T_{\text{Prädiktion}})$$

wobei $\text{BoxPositionLinks}_{\text{neu}}$ und $\text{BoxPositionLinks}_{\text{aktuell}}$ bzw. $\text{BoxPositionRechts}_{\text{neu}}$ und $\text{BoxPositionRechts}_{\text{aktuell}}$ die neue bzw. die aktuelle Position der linken bzw. der rechten Boxkante ist und $\text{BoxGeschwindigkeitLinks}_{\text{aktuell}}$ und $\text{BoxGeschwindigkeitRechts}_{\text{aktuell}}$ die aktuell gemessene Winkelgeschwindigkeit der linken bzw. der rechten Boxkante ist und $\text{NormGeschwindigkeit}_{\text{aktuell}}$ die aktuell gemessene so genannte normalisierte oder normierte Boxgeschwindigkeit ist und $T_{\text{Prädiktion}}$ die zum Prädiktionszeitschritt zugehörige Prädiktionszeit ist. Die $\text{NormGeschwindigkeit}_{\text{aktuell}}$ ist oder wird insbesondere abgeleitet von der berechneten Skalierungsänderung der Objektbox.

Erfindungsgemäß ist es vorgesehen, dass ein einer prognostizierten Objektbox zu Grunde liegendes Objekt in Bezug auf eine mögliche Kollision als kritisch bestimmt wird, insbesondere mit einem Wert einer Kritikalität von 100 %, wenn der Anteil der Breite der prognostizierten Objektbox zu dem Objekt an der Breite eines zu Grunde liegenden Bildes oder eines vorgegebenen Ausschnitts davon einen vorbestimmten ersten Schwellenwert überschreitet. Die Schwelle muss auf jedes Fahrzeugmodel und/oder für jede neu appliziert werden.

In diesem Zusammenhang ist es von besonderem Vorteil, wenn der Wert einer zu einem Objekt bestimmten Kritikalität um denjenigen Anteil reduziert wird, mit welchem die zum Objekt prognostizierte Objektbox in ihrer Breite außerhalb des zu Grunde liegenden Bildes oder des vorgegebenen Ausschnitts davon positioniert ist.

Alternativ oder zusätzlich ist es in vorteilhafter Weise vorgesehen, dass ein einer prognostizierten Objektbox zu Grunde liegendes Objekt in Bezug auf eine mögliche Kollision als unkritisch bestimmt wird, insbesondere mit einem Wert einer Kritikalität von 0 %, wenn die prognostizierten Objektbox komplett außerhalb des zu Grunde liegenden Bildes oder des vorgegebenen Ausschnitts liegt.

Um ein möglichst realistisches Szenario bei der Prognose der Objektboxen in der Zukunft zu berücksichtigen, ist es gemäß einer anderen vorteilhaften Weiterbildung des erfindungsgemäßen Betriebsassistenzverfahrens vorgesehen, als Objekt einen Fußgänger zu ermitteln, Position und Bewegung des Fußgängers als Objekt auf der Grundlage eines Fußgängermodells zu untersuchen und zu bewerten, eine Beschleunigungsfähigkeit des Fußgängers als Objekt auf der Grundlage einer für den Fußgänger ermittelten Geschwindigkeit zu bestimmen und die Kritikalität für den Fußgänger als Objekt auf der Grundlage der Geschwindigkeit und der Beschleunigungsfähigkeit zu bestimmen.

Dabei ist es von besonderem Vorteil, wenn auf der Grundlage der Beschleunigungsfähigkeit eine erweiterte und die prognostizierte Objektbox umhüllende oder zumindest lateral oder horizontal umfassende prognostizierte Objektbox erzeugt und bei der Bewertung der Kritikalität zu Grunde gelegt wird.

Gemäß einem weiteren Aspekt der vorliegenden Erfindung wird auch eine Steuereinheit für ein Betriebsassistenzsystem einer Arbeitsvorrichtung und insbesondere eines Fahrzeugs geschaffen.

Die erfindungsgemäße Steuereinheit ist dazu eingerichtet, ein erfindungsgemäßes Betriebsassistenzverfahren zu steuern, ablaufen zu lassen und/oder ein zu Grunde liegendes Betriebsassistenzsystem gemäß einem erfindungsgemäßen Betriebsassistenzverfahren zu betreiben.

Ferner ist Gegenstand der vorliegenden Erfindung auch ein Betriebsassistenzsystem für eine Arbeitsvorrichtung und insbesondere für ein Fahrzeug als solches. Das Betriebsassistenzsystem ist dazu eingerichtet, ein erfindungsgemäßes Betriebsassistenzverfahren auszuführen. Dazu weist das Betriebsassistenzsystem insbesondere eine erfindungsgemäß ausgestaltete Steuereinheit auf.

Ferner schafft die vorliegende Erfindung auch eine Arbeitsvorrichtung, welche ein erfindungsgemäßes Betriebsassistenzsystem aufweist.

Die Arbeitsvorrichtung ist insbesondere als Fahrzeug, Kraftfahrzeug oder Personenkraftwagen ausgebildet.

Gemäß einem weiteren Aspekt der vorliegenden Erfindung wird auch die Verwendung des erfindungsgemäßen Betriebsassistenzverfahrens, der erfindungsgemäßen Steuereinheit, des erfindungsgemäßen Betriebsassistenzsystems und/oder der erfindungsgemäßen Arbeitsvorrichtungen für den Fußgängerschutz, für den Radfahrerschutz, für ACC und/oder für Ausweichsysteme oder -verfahren vorgeschlagen.

Kurzbeschreibung der Figuren

Unter Bezugnahme auf die beigefügten Figuren werden Ausführungsformen der Erfindung im Detail beschrieben.

Figur 1                 zeigt eine schematische Draufsicht auf eine erfindungsgemäße Arbeitsvorrichtung nach Art eines Fahrzeugs, bei welcher eine Ausführungsform des erfindungsgemäßen Betriebsassistenzverfahrens zum Einsatz kommen kann.

Figuren 2 bis 4         zeigen schematische Seitenansichten verschiedener Szenen in einem Sichtfeld, die mit dem erfindungsgemäßen Betriebsassistenzverfahren bewertet werden können.

Figuren 5 und 6         zeigen Flussdiagramme einer Ausführungsform des erfindungsgemäßen Betriebsassistenzverfahrens bzw. der iterativen Bestimmung einer prognostizierten Objektbox.

Bevorzugte Ausführungsformen der Erfindung

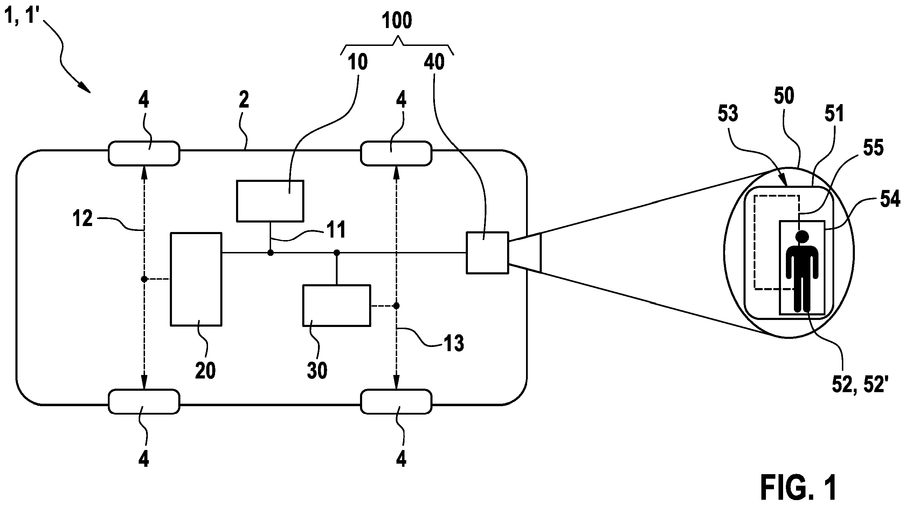

Nachfolgend werden unter Bezugnahme auf die Figuren 1 bis 6 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt eine schematische Draufsicht auf eine erfindungsgemäße Arbeitsvorrichtung 1 nach Art eines Fahrzeugs 1', bei welcher eine Ausführungsform des erfindungsgemäßen Betriebsassistenzverfahrens S zum Einsatz kommen kann.

Das erfindungsgemäße Fahrzeug 1' wird dem Kern nach gebildet von einer Karosserie 2 an welcher Räder 4 montiert sind, die über eine Antriebseinheit 20 mittels eines Antriebsstrangs 12 antreibbar, sowie über eine Lenk- und Bremseinheit 30 und über einen entsprechenden Brems- und/oder Lenkstrang 13 brems- und/oder lenkbar sind.

Des Weiteren ist eine Ausgestaltungsform des erfindungsgemäßen Betriebsassistenzsystems 100 Bestandteil des erfindungsgemäßen Fahrzeugs 1' als Arbeitsvorrichtung 1 im Sinne der vorliegenden Erfindung. Das Betriebsassistenzsystem 100 besteht aus einer Kameraeinheit 40 zur monokularen Abbildung eines Sichtfeldes 50 aus dem Umfeld des Fahrzeugs 1'. Das Sichtfeld 50 enthält eine Szene 53 mit einem Fußgänger 52' als Objekt 52.

Die Steuereinheit 10 ist über eine Steuer- und Erfassungsleitung 11 einerseits mit der Kameraeinheit 40 und andererseits zur Steuerung mit der Antriebseinheit 20 und der Brems- und/oder Lenkeinheit 30 verbunden.

Bei der in Figur 1 gezeigten Ausführungsform werden über die Steuer- und Erfassungsleitung 11 von der Kameraeinheit 40 erfasste Bilder 51 der Szene 53 aus dem Sichtfeld 50 in die Steuereinheit 10 übertragen und dort im Zusammenhang mit dem erfindungsgemäßen Betriebsassistenzverfahren S ausgewertet.

So werden erfindungsgemäß im Zusammenhang mit dem Fußgänger 52' als Objekt 52 in jedem Bild oder Frame 51 eine Objektbox 54 und aus Objektboxen zu zeitlich direkt aufeinanderfolgenden Bildern 51 Parameter zu Positionsänderungen und Skalierungsänderungen, zu Winkelgeschwindigkeiten der Boxkanten und/oder davon abgeleiteten Größen der Objektboxen 54 ermittelt und einer Prognose zum Angeben einer prognostizierten Box 55 zum Objekt 52 auf der Grundlage eines interaktiven Verfahrens I zu Grunde gelegt.

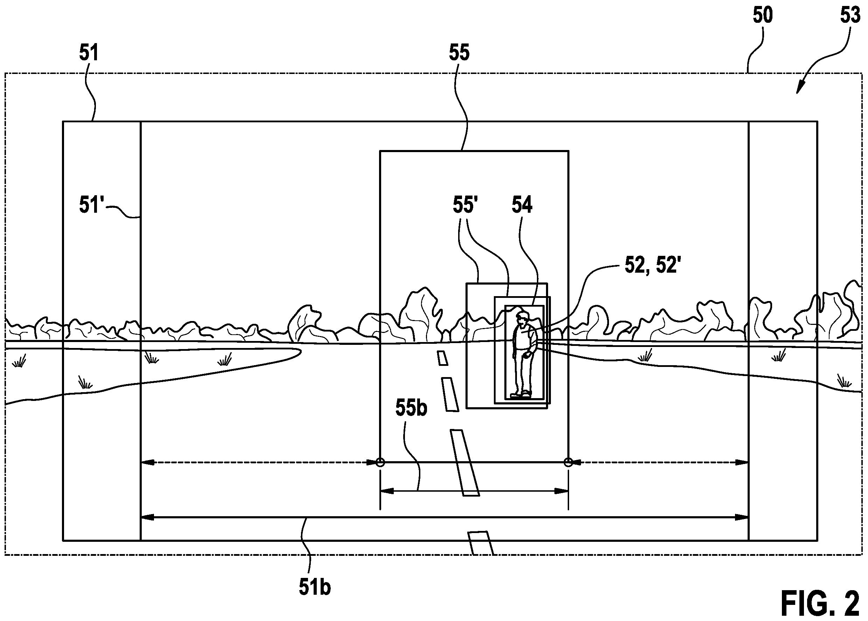

Figuren 2 bis 4 zeigen schematische Seitenansichten verschiedener Szenen 53 in einem Sichtfeld 50, die mit dem erfindungsgemäßen Betriebsassistenzverfahren S bewertet werden können.

In der in Figur 2 dargestellten Situation befindet sich in der Szene 53 ein Fußgänger 52' als Objekt 52 im Sichtfeld 50, welches mit der in Figur 1 gezeigten Kameraeinheit 40 in einem Bild oder Frame 51 abgebildet wird. Gegebenenfalls wird das Bild oder Frame 51 durch einen entsprechenden Ausschnitt oder Teil 51' beschränkt.

Zunächst wird zu dem Fußgänger 52' eine Objektbox 54 abgeleitet. Im Vergleich zu einer Objektbox 54 aus einem zeitlich vorangehenden Bild oder Frame 51 werden dann eine Skalierungsänderung und das Maß an Verschiebung oder Translation der Objektbox 54, Winkelpositionen, Winkelgeschwindigkeiten der Boxkanten und/oder davon abgeleitete Größen bestimmt. Aus diesen Größen lässt sich dann in dem oben beschriebenen iterativen Verfahren I mit den Schritten I1 bis I5 über eine Anzahl von Zeitinkrementen eine Prognose im Hinblick auf eine zu erwartende prognostizierte Objektbox 55 zu einer verstrichenen Prognosezeitspanne abgeben. Auf diese Weise kann die gegebene Objektbox 54 hinsichtlich Position mit den rechten und linken unteren Ecken und der Breite 55b zu einer prognostizierten Objektbox 55 für eine Prognosezeitspanne in die Zukunft extrapoliert werden.

Für die Bewertung wird dann die Breite 55b der um die Prognosezeitspanne in der Zukunft prognostizierten Objektbox 55 mit der Breite 51b des Ausschnitts 51' des Bildes 51 verglichen. Übersteigt deren Verhältnis einen vorgegebenen ersten Schwellenwert, so wird das Objekt 52 mit einer Kritikalität von 100 % als kritisch angesehen.

Zwar kann dieser Kritikalitätswert bereits verwendet werden, um erfindungsgemäß eine Warnung an den Benutzer der Arbeitsvorrichtung 1 und insbesondere an den Fahrer des Fahrzeugs 1' auszusenden oder um direkt in das Betriebsverfahren der Arbeitsvorrichtung 1 einzugreifen. Jedoch ist es auch denkbar, sofern es sich bei dem Objekt 52 um einen Fußgänger 52' handelt, in realitätsnaher Art und Weise weitere Aspekte des Objekts 52 einfließen zu lassen, zum Beispiel ein prognostiziertes Beschleunigungsverhalten oder dergleichen.

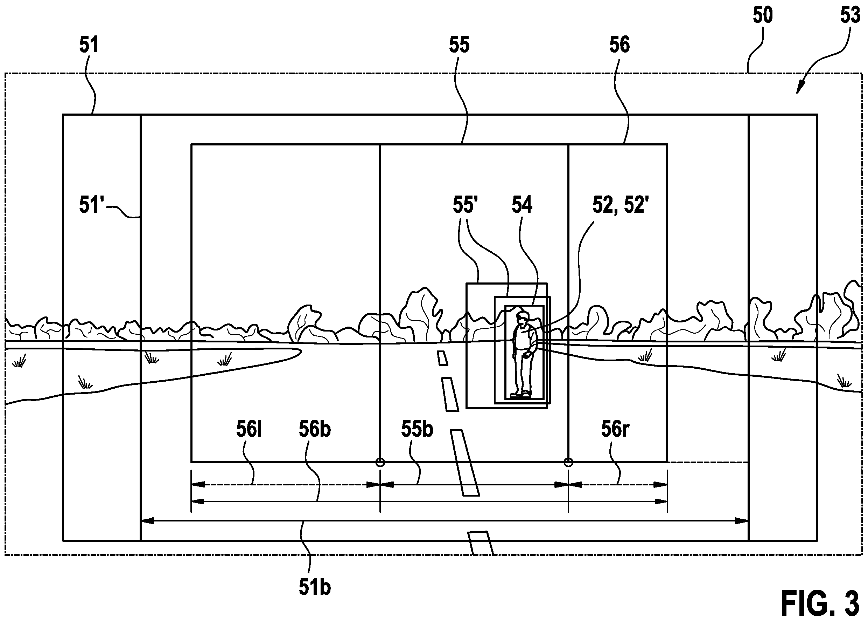

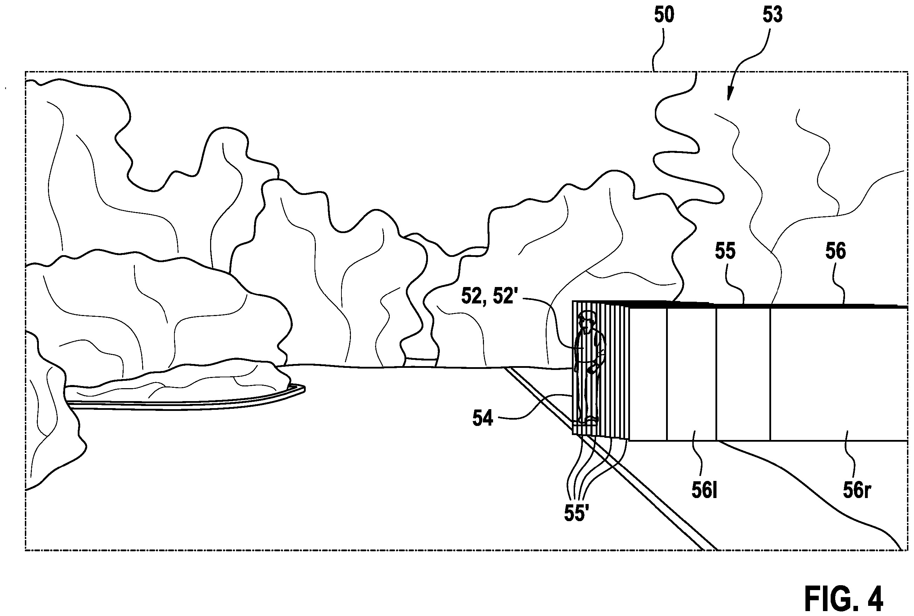

Dazu können eine aktuelle Geschwindigkeit des Fußgängers 52' als Objekt 52 und seine Größe abgeleitet werden und als Eingangsparameter eines Fußgängermodells dienen. Das Fußgängermodell gibt dann entsprechende Werte für eine zu erwartende Beschleunigung oder für ein zu erwartendes Beschleunigungsverhalten aus. Diese Werte können verwendet werden, um gemäß den Figuren 3 und 4 eine umfassende oder einhüllende Objektbox 56 zu konstruieren deren rechte und linke Abschnitte 56r und 56l, die über die ursprünglich prognostizierte Objektbox 55 hinausgehen, Unsicherheitsbereiche in Bezug auf ein positives oder negatives Beschleunigungsverhalten des Fußgängers 52' als Objekt 52 darstellen.

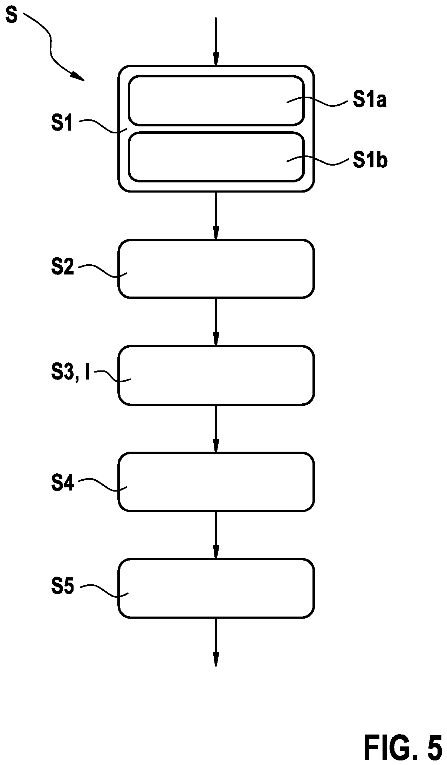

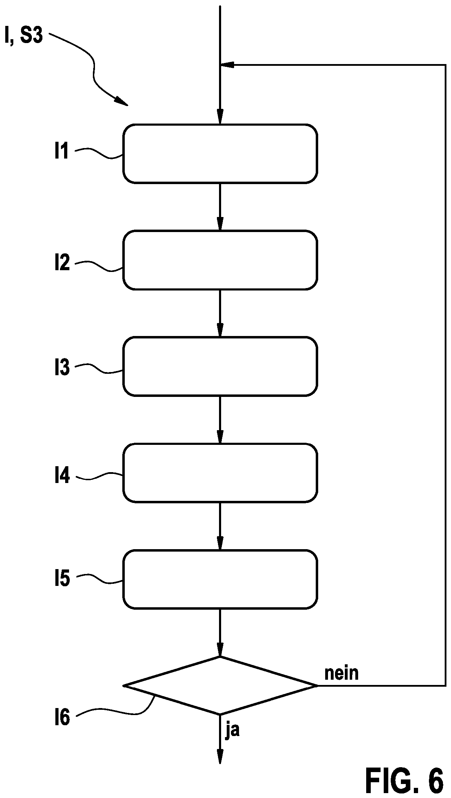

Figuren 5 und 6 zeigen Flussdiagramme einer Ausführungsform des erfindungsgemäßen Betriebsassistenzverfahrens S bzw. der iterativen Bestimmung I einer prognostizierten Objektbox 55, wie sie im Zusammenhang mit der allgemeinen Darstellung der vorliegenden Erfindung oben bereits erörtert wurden.

In diesem Zusammenhang ist noch zu erwähnen, dass das iterative Verfahren I im Wesentlichen den Schritt S3 der Ausführungsform des erfindungsgemäßen Betriebsassistenzverfahrens S bildet, wobei im Schritt I6 geprüft wird ob die Prognosezeitspanne durch Ablauf der Zeitinkremente bereits erreicht ist und/oder ob eine andere Abbruchbedingung für die Iteration vorliegt.

Eine alternative oder weitere Abbruchbedingung kann dabei zum Beispiel im Zusammenhang mit dem Überschreiten eines zweiten Schwellenwerts durch die Breite der prognostizierten Objektbox 55 im Vergleich zur Breite des Bildes 51 oder des Ausschnitts 51' gesehen werden, wobei der zweite Schwellenwert größer ist als der erste Schwellenwert.

Diese und weitere Merkmale und Eigenschaften der vorliegenden Erfindung werden an Hand der folgenden Darlegungen weiter erläutert:
Die vorliegende Erfindung beschreibt Maßnahmen, wie Kritikalitätsmaße für ein Kollisionswarnsystem - zum Beispiel als Teil eines Betriebsassistenzsystems einer Arbeitsvorrichtung und insbesondere eines Fahrzeugs - allein basierend auf Messdaten eines monokularen Videosystems bestimmt werden können.

Hierfür häufig verwendete Kollisionsindikatoren sind "Time-To-Collision" (TTC), "Time-To-Brake" (TBB). Diese geben Aufschluss darüber, wann eine Kollision stattfinden wird bzw. wann ein Bremsvorgang eingeleitet werden muss, um eine Kollision zu verhindern. Die Parameter TTB und TTC können zuverlässig auf Basis von Daten einer Mono-Video-Kamera und primär aus den Skalierungsänderungen von Objektboxen berechnet werden, und zwar ohne die Notwendigkeit der Bestimmung von Abständen, Relativgeschwindigkeiten und Relativbeschleunigungen.

Ein weiterer Kollisionsindikator ist der Wert "Constant Bearing" (CB), welcher ursprünglich aus der Schifffahrt stammt und ein Indikator dafür ist, ob man sich bei gleichbleibender Eigen- oder Egobewegung und gleichbleibender Objektbewegung mit einem Objekt 52 auf einem Kollisionskurs befindet. Auch der CB kann rein auf der Grundlage von Mono-Video-Daten, also auf zweidimensionaler Datenbasis berechnet werden.

Stand der Technik für Kritikalitätsberechnungen ist die Verwendung eines 3D-basierten Weltkoordinatensystems.

Basis für ein derartiges Vorgehen ist die Verwendung von dreidimensionalen Daten oder 3D-Daten, zum Beispiel im Sinne von Abständen, Relativgeschwindigkeiten und Relativbeschleunigungen - welche mit einer Monokamera oder monokularen Kamera nur in eingeschränkter Qualität und durch Schätzung bestimmt werden können.

Das CB-Konzept ist schwer verständlich, schwer zu parametrieren, erlaubt keine Prädiktion in die Zukunft und keine Verwendung von Fußgängerbewegungsmodellen.

Die Konzepte TTC/TTB allein sind nicht hinreichend für eine Bremsentscheidung, da nur der zeitliche Aspekt betrachtet wird, aber nicht, ob sich ein Objekt auf Kollisionskurs befindet. Die Konzepte TTC und TTB erlauben z.B. keine Aussage darüber, ob an einem Objekt vorbeigefahren wird.

Der neue und erfindungsgemäße zweidimensionale oder 2D-basierte Ansatz zur Kritikalitätsberechnung basiert rein oder im Wesentlichen auf gemessenen zweidimensionalen oder 2D-Daten oder -Signalen und insbesondere auf der Bestimmung so genannter Boxkoordinaten für Objektboxen sowie der Parameter der Skalierungsänderung, der Boxtranslation, der Winkelpositionen und/oder der Winkelgeschwindigkeiten, welche eine Skalenänderung oder Größenänderung bzw. eine Bewegung oder Verschiebung einer jeweiligen Objektbox in einem Bild oder Frame oder im jeweiligen Ausschnitt von Bild oder Frame beschreiben und welche zusammen mit den Boxkoordinaten in hoher Signalgüte vorliegen oder bestimmt werden können.

Der erfindungsgemäße Ansatz beinhaltet auch eine Vorhersage, Prognose oder Prädiktion in die Zukunft - und zwar im Hinblick auf die Position einer jeweiligen Objektbox 54 und ihrer Größe/Breite oder Größenänderung/Breitenänderung - und erlaubt somit erfindungsgemäß die Verwendung von Fußgängerbewegungsmodellen.

Fußgängerbewegungsmodelle können also zur Prädiktion des Aufenthaltsgebiets eines Fußgängers 52' zum Einsatz kommen. Dabei werden Modelle über die Beschleunigungsfähigkeit eines Fußgängers 52' in verschiedenen Bewegungszuständen - zum Beispiel stehend, gehend, laufend, rennend - verwendet, um eine Aussage darüber zu treffen, wo sich der Fußgänger 52' in der Zukunft befinden könnte. Der Wert der Kritikalität berechnet sich aus dem Überlapp des prädizierten oder prognostizierten eigenen Aufenthaltsgebiets und des prädizierten oder prognostizierten möglichen Aufenthaltsgebiets 56 des Fußgängers 52'.

Der erfindungsgemäße Ansatz ist leichter zu verstehen und zu parametrieren als das reine CB-Konzept und eine experimentelle Bewertung ergibt, dass der erfindungsgemäße Ansatz bessere Ergebnisse liefert, als dies mit CB-Implementierungen und herkömmlichen 3D-basierten Verfahren auf Basis von mit einer Monokamera geschätzten 3D-Daten möglich ist.

Eine Voraussage oder Prädiktion kann und wird im Allgemeinen auch für jedes aufgenommene Bild oder Frame durchgeführt. Dabei wird für jedes aufgenommene Bild oder Frame eine Zielzeitspanne, zum Beispiel von 2 Sekunden, festgesetzt. Die Voraussage erfolgt also für die Zielzeitspanne in die Zukunft. Dabei wird die Zielzeitspanne in eine Mehrzahl und zum Beispiel gleicher Zeitinkremente unterteilt. Jedoch können auch die Zielzeitspanne und/oder die Zeitinkremente variabel gestaltet werden und abhängig sein, gewählt und bestimmt werden von anderen Betriebsparametern.

Folgende Prozesse werden dabei für jedes aufgenommene Bild 51 oder Frame durchgeführt:

- Erfassen der lateralen Boxkordinaten einer jeweiligen Objektbox 54 eines gegebenen Objektes 52 im Sichtfeld 50.

- Erfassen der Skalierungsänderung der Objektbox 54 eines Objekts 52 in Bezug auf eines oder auf mehrere vorangehende Bilder oder Frames.

- Erfassen der Boxbewegung, Boxverschiebung oder Boxtranslation (Einheit Pixel), Winkelpositionen und/oder Winkelgeschwindigkeiten der Boxkanten einer Objektbox 54 eines gegebenen Objekts 52 im Sichtfeld 50 in lateraler Richtung in Bezug auf das vorangehende Bild oder Frame oder eines Teils oder Ausschnitts davon.

- Für die konkrete Prädiktion oder Prognose wird das oben bereits beschriebene Vorgehen mit den Verfahren S und I für n Zeitinkremente bis zur Zielzeitspanne als Prognosezeitspanne zu Grunde gelegt.

- In jedem der n Zyklen - also für jedes Zeitinkrement bis zur erreichten vorgegebenen Zielzeitspanne - wird die prädizierte Boxbreite mit der Bildbreite des Kamerabilds 51 oder mit der Breite eines vorgegebenen oder vorbestimmten Teils oder Ausschnitts 51 ' davon verglichen.

- Das Verhältnis aus der Boxbreite im Bild und der Bildbreite oder der Breite des Ausschnitts kann der Bestimmung eines Maßes der Kritikalität zu Grunde gelegt werden. Sobald die Boxbreite 55b eine gewisse Breite 51b des Bildes 51 oder des Ausschnitts 51' einnimmt und also einen Schwellenwert - von z.B. 35 % - überschreitet, wird eine Kritikalität von 100% angenommen und gesetzt.

- Liegt andererseits die prädizierte oder prognostizierte Box 55 z.B. teilweise oder komplett außerhalb des Bildes 51 oder des Ausschnitts 51', ist die Situation unkritisch, der Wert der Kritikalität wird auf 0 % gesetzt.

- In Abhängigkeit von der Position und/oder Geschwindigkeit des Fußgängers 52' kann mit Hilfe eines Fußgängermodels dessen Beschleunigungsfähigkeit ermittelt werden. Dabei kann eine zweite und breitere Objektbox 56 einem Fußgänger 52' als Objekt 52 mit dem möglichen lateralen Aufenthaltsgebiet des Fußgängers 52' innerhalb des Bildes 51 oder des Ausschnitts 51' des Bildes 51 unter Berücksichtigung von dessen Beschleunigungsfähigkeit aufgespannt werden.

- Zur Bestimmung der Geschwindigkeit des Fußgängers 52' als Objekt 52 und zur Umrechnung der Beschleunigungsfähigkeit in Pixel- oder Winkelkoordinaten können Annahmen über die Größe des Fußgängers 52' als Objekt 52 getroffen werden. Es kann zum Beispiel eine übliche Größe von 1,75m zu Grunde gelegt werden.

- Der zuvor berechnete Wert der Kritikalität kann ferner um den Anteil der zuletzt prädizierten oder prognostizierten Box 55 verringert oder minimiert werden, welcher außerhalb des Bildes 51 oder Frames und des jeweiligen Ausschnitts 51' oder Teils davon liegt. Liegen z.B. 50 % der Boxbreite 55b - nämlich wenn die Objektboxen 55 das mögliche Aufenthaltsgebiet unter Berücksichtigung des Fußgängermodells repräsentieren - außerhalb des Bildes 51 oder Frames bzw. des gegebenen Teils oder Ausschnitts 51', wird die Kritikalität entsprechend reduziert. Es wird die Kritikalität umso stärker reduziert, je weiter die Prädiktion in der Zukunft liegt, weil potenziell ein größeres Aufenthaltsgebiet außerhalb des Bildes 51 oder Ausschnitts 51 ' liegt. Dieses Verhalten kann gewünscht sein, weil mit zunehmender zeitlicher Prädiktion in die Zukunft, die Unsicherheit über das Verhalten des Fußgängers 52' wächst.

- Erreicht die prädizierte Objektbox 55 eines Fußgängers als Objekt 52 eine kritische Größe - z.B. einen Schwellenwert von 35% der Frame- oder Bildbreite - wird die Prädiktion in diesem Zyklus der Iteration I abgebrochen, da eine eventuelle Kollision zu diesem Zeitpunkt schon stattgefunden hätte.

**Patentansprüche**

1. Betriebsassistenzverfahren (S) für eine Arbeitsvorrichtung (1), bei welchem

(S1)    Objektboxen (54) zu einem Objekt (52) in einem Sichtfeld der Arbeitsvorrichtung (1) zu aufeinanderfolgenden Zeitpunkten oder derartige Objektboxen (54) charakterisierende Daten erhalten werden,

(S2)    aus Objektboxen (54) eines gegebenen Objekts (52) zu aufeinanderfolgend oder direkt aufeinanderfolgend aufgenommenen Bildern eine momentane Skalierungsänderung oder davon abgeleitete Größen einer Objektbox (54) zum jeweiligen Objekt (52) und eine momentane laterale Positionsänderung der Objektbox im Bild (54) zum jeweiligen Objekt (52) bestimmt werden,

(S3)    aus der momentanen Skalierungsänderung oder davon abgeleitete Größen und der momentanen lateralen Positionsänderung im Bild zu einer Objektbox (54) zu einem jeweiligen Objekt (52) eine in die Zukunft prognostizierte Objektbox (55) bestimmt wird, wobei eine in die Zukunft prognostizierte Objektbox (55) zumindest zu einem aktuell zuletzt erfassten Bild bestimmt wird, indem über eine Mehrzahl von Zeitinkrementen bis zu einer Prognosezeitspanne iterativ Werte für die Skalierung einer jeweiligen Objektbox (54), für die Koordinaten einer jeweiligen Objektbox (54), für die Translation einer jeweiligen Objektbox (54) und für die laterale Breite einer jeweiligen Objektbox (54) bestimmt und aktualisiert werden,

(S4)    die Position der prognostizierten Objektbox (55) und/oder das Verhältnis einer lateralen Erstreckung der prognostizierten Objektbox (55) zu einer lateralen Erstreckung eines erfassten Sichtfeldes (50) und/oder der aufgenommenen Bilder oder eines Ausschnitts davon bestimmt und bewertet werden, und

(S5)    in Abhängigkeit vom Ergebnis der Bewertung (i) bestimmt wird, ob ein der prognostizierten Objektbox (55) zu Grunde liegendes Objekt (52) in Bezug auf eine mögliche Kollision kritisch ist oder nicht, und (ii) ein Betriebszustand der Arbeitsvorrichtung (1) gesteuert oder geregelt wird, wobei ein einer prognostizierten Objektbox (55) zu Grunde liegendes Objekt (52) in Bezug auf eine mögliche Kollision als kritisch bestimmt wird, insbesondere mit einer Kritikalität mit einem Wert von 100 %, wenn der Anteil der Breite der prognostizierten Objektbox (55) an der Breite des zu Grunde liegenden Bildes oder des vorgegebenen Ausschnitts davon einen vorbestimmten ersten Schwellenwert überschreitet.

2. Betriebsassistenzverfahren (S) nach Anspruch 1, bei welchem bei dem oder für den Schritt (S1) des Erhaltens der Objektboxen (54) und/oder der die Objektboxen (54) charakterisierenden Daten

(S1a)    ein Sichtfeld (50) der zu Grunde liegenden Arbeitsvorrichtung (1) unter Aufnahme zeitlich aufeinanderfolgender Bilder optisch zweidimensional und/oder monokular erfasst wird und

(S1b)    in aufeinanderfolgenden aufgenommenen Bildern mindestens ein Objekt (52) und eine dem Objekt (52) zugeordnete Objektbox (54) bestimmt werden.

3. Betriebsassistenzverfahren (S) nach Anspruch 3, bei welchem für jedes Zeitinkrement die folgenden Schritte - insbesondere in der angegebenen Reihenfolge - durchgeführt werden:

(I1) Rücksetzen oder Vorbesetzen der zu berechnenden Werte gemäß den Zuordnungsvorschriften

$$\text{Skalierung}_{alt} := \text{Skalierung}_{neu}$$
$$\text{BoxTranslationX}_{alt} := \text{BoxTranslationX}_{neu}$$
$$\text{BoxBreite}_{alt} := \text{BoxBreite}_{neu}$$
$$\text{BoxPositionLinks}_{alt} := \text{BoxPositionLinks}_{neu}$$
$$\text{BoxPositionRechts}_{alt} := \text{BoxPositionRechts}_{neu},$$

(I2) Aktualisieren der Skalierung gemäß der nachfolgenden Zuordnungsvorschrift

$$\text{Skalierung}_{neu} := 1 / (2 - \text{Skalierung}_{alt})$$

(I3) Aktualisieren der horizontalen Objektboxtranslation gemäß der nachfolgenden Zuordnungsvorschrift

$$\text{BoxTranslationX}_{neu} := \text{BoxTranslationX}_{alt} \times \text{Skalierung}_{alt}$$

(I4) Aktualisieren horizontalen Objektboxbreite gemäß der nachfolgenden Zuordnungsvorschrift

$$\text{BoxBreite}_{neu} := \text{BoxPositionRechts}_{alt} - \text{BoxPositionLinks}_{alt}$$

(I5) Prädizieren der horizontalen Boxpositionen gemäß den nachfolgenden Zuordnungsvorschriften

$\text{BoxPositionLinks}_{neu} := \text{BoxPositionLinks}_{alt} + \text{BoxTranslationX}_{neu} - 0.5 \times \text{BoxBreite}_{neu} \times (\text{Skalierung}_{neu} - 1) / \text{Skalierung}_{neu}$

$\text{BoxPositionRechts}_{neu} := \text{BoxPositionRechts}_{alt} + \text{BoxTranslationX}_{neu} - 0.5 \times \text{BoxBreite}_{neu} \times (\text{Skalierung}_{neu} - 1) / \text{Skalierung}_{neu},$

wobei $\text{Skalierung}_{alt}$, $\text{Skalierung}_{neu}$ die alte bzw. die neue Skalierung einer Objektbox (54), $\text{BoxTranslationX}_{alt}$, $\text{BoxTranslationX}_{neu}$ die alte bzw. die neue Verschiebung einer Objektbox (54), $\text{BoxBreite}_{alt}$ , $\text{BoxBreite}_{neu}$ die alte bzw. die neue Breite einer Objektbox (54), $\text{BoxPositionLinks}_{alt}$, $\text{BoxPositionl\_inks}_{neu}$ die alte bzw. die neue Position der linken unteren Ecke einer Objektbox (54) als erste x-Koordinate der jeweiligen Objektbox (54) sowie $\text{BoxPositionRechts}_{alt}$, $\text{BoxPositionRechts}_{neu}$ die alte bzw. die neue Position der rechten unteren Ecke einer Objektbox (54) als zweite x-Koordinate der jeweiligen Objektbox (54) bzw. deren Werte bezeichnen.

4. Betriebsassistenzverfahren (S) nach einem der vorhergehenden Ansprüche, bei welchem zur Ermittlung einer neuen Boxposition die folgende Berechnungsvorschrift ausgeführt wird:

$\text{BoxPositionLinks}_{neu} := (\text{BoxPositionLinks}_{aktuell} + \text{BoxGeschwindigkeitLinks}_{aktuell} * T_{\text{Prädiktion}}) / (1 + \text{NormGeschwindigkeit}_{aktuell} * T_{\text{Prädiktion}})$

$\text{BoxPositionRechts}_{neu} := (\text{BoxPositionRechts}_{aktuell} + \text{BoxGeschwindigkeitRechts}_{aktuell} * T_{\text{Prädiktion}}) / (1 + \text{NormGeschwindigkeit}_{aktuell} * T_{\text{Prädiktion}})$

wobei $\text{BoxPositionLinks}_{neu}$ und $\text{BoxPositionLinks}_{aktuell}$ bzw. $\text{BoxPositionRechts}_{neu}$ und $\text{BoxPositionRechts}_{aktuell}$ die neue bzw. die aktuelle Position der linken bzw. der rechten Boxkante ist und $\text{BoxGeschwindigkeitLinks}_{aktuell}$ und $\text{BoxGeschwindigkeitRechts}_{aktuell}$ die aktuell gemessene Winkelgeschwindigkeit der linken bzw. der rechten Boxkante ist und $\text{NormGeschwindigkeit}_{aktuell}$ die aktuell gemessene so genannte normalisierte Boxgeschwindigkeit ist und $T_{\text{Prädiktion}}$ die zum Prädiktionszeitschritt zugehörige Prädiktionszeit ist, wobei die $\text{NormGeschwindigkeit}_{aktuell}$

ist von der berechneten Skalierungsänderung der Objektbox abgeleitet ist oder wird.

5. Betriebsassistenzverfahren (S) einem der vorhergehenden Ansprüche, bei welchem der Wert einer zu einem Objekt (52) bestimmten Kritikalität um denjenigen Anteil reduziert wird, mit welchem die zum Objekt (52) prognostizierte Objektbox (55) in ihrer Breite außerhalb des zu Grunde liegenden Bildes oder des vorgegebenen Ausschnitts positioniert ist.

6. Betriebsassistenzverfahren (S) nach einem der vorangehenden Ansprüche, bei welchem ein einer prognostizierten Objektbox (55) zu Grunde liegendes Objekt (52) in Bezug auf eine mögliche Kollision als unkritisch bestimmt wird, insbesondere mit einer Kritikalität mit einem Wert von 0 %, wenn die prognostizierte Objektbox (55) komplett außerhalb eines zu Grunde liegenden Bildes oder eines vorgegebenen Ausschnitts davon liegt.

7. Betriebsassistenzverfahren (S) nach einem der vorangehenden Ansprüche, bei welchem als Objekt (52) ein Fußgänger (52') ermittelt wird, Position und Bewegung des Fußgängers (52') als Objekt (52) auf der Grundlage eines Fußgängermodells untersucht und bewertet werden, eine Beschleunigungsfähigkeit des Fußgängers (52') als Objekt (52) auf der Grundlage einer für den Fußgänger (52') ermittelten Geschwindigkeit bestimmt wird und die Kritikalität für den Fußgänger (52') als Objekt (52) auf der Grundlage der Geschwindigkeit und der Beschleunigungsfähigkeit bestimmt wird, wobei insbesondere auf der Grundlage der Beschleunigungsfähigkeit eine die prognostizierte Objektbox (55) umhüllende oder zumindest lateral oder horizontal umfassende Objektbox (56) erzeugt und bei der Bewertung der Kritikalität zu Grunde gelegt wird.

8. Steuereinheit (10) für ein Betriebsassistenzsystem (100) einer Arbeitsvorrichtung (1) und insbesondere eines Fahrzeugs, welche eingerichtet ist, ein Betriebsassistenzverfahren (S) nach einem der vorangehenden Ansprüche zu steuern, ablaufen zu lassen und/oder ein zu Grunde liegendes Betriebsassistenzsystem (100) gemäß einem Betriebsassistenzverfahren (S) nach einem der vorangehenden Ansprüche zu betreiben.

9. Betriebsassistenzsystem (100) für eine Arbeitsvorrichtung (1) und insbesondere für ein Fahrzeug, welche eingerichtet ist ein Betriebsassistenzverfahren (S) nach einem der vorangehenden Ansprüche auszuführen und welches dazu eine Steuereinheit (10) nach Anspruch 8 aufweist.

10. Arbeitsvorrichtung (1), welche ein Betriebsassistenzsystem (100) nach Anspruch 9 aufweist und welche insbesondere als Fahrzeug, Kraftfahrzeug oder Personenkraftwagen ausgebildet ist.

11. Verwendung des Betriebsassistenzverfahrens (S) nach einem der Ansprüche 1 bis 7, der Steuereinheit (10) nach Anspruch 8, des Betriebsassistenzsystems (100) nach Anspruch 9 und/oder der Arbeitsvorrichtungen (1) nach Anspruch 10 für den Fußgängerschutz, für den Radfahrerschutz, für ACC und/oder für Ausweichsysteme oder -verfahren.

**Claims**

1. Operating assistance method (S) for a working device (1), in which

    (S1) object boxes (54) in relation to an object (52) in a field of view of the working device (1) at successive times or data characterizing such object boxes (54) are obtained,
    (52) from object boxes (54) of a given object (52) for images recorded in succession or in direct succession, an instantaneous scaling change or sizes, derived therefrom, of an object box (54) in relation to the respective object (52) and an instantaneous lateral position change of the object box in the image (54) in relation to the respective object (52) are determined,
    (S3) from the instantaneous scaling change or sizes derived therefrom and the instantaneous lateral position change in the image for an object box (54) in relation to a respective object (52), an object box (55) predicted in the future is determined, wherein an object box (55) predicted in the future is determined at least for a last-captured image by iteratively determining and updating, over a plurality of time increments up to a prediction time span, values for the scaling of a respective object box (54), for the coordinates of a respective object box (54), for the translation of a respective object box (54) and for the lateral width of a respective object box (54), (54) the position of the predicted object box (55) and/or the ratio of a lateral extent of the predicted object box (55) to a lateral extent of a captured field of view (50) and/or the recorded images or a section thereof are determined and assessed, and

(55) depending on the result of the assessment, (i) it is determined whether or not an object (52) on which the predicted object box (55) is based is critical with regard to a possible collision, and (ii) an operating state of the working device (1) is controlled or regulated,

wherein an object (52) on which a predicted object box (55) is based is determined as being critical with regard to a possible collision, in particular with a criticality with a value of 100%, if the proportion of the width of the predicted object box (55) in relation to the width of the underlying image or of the specified section thereof exceeds a predetermined first threshold value.

2. Operational assistance method (S) according to Claim 1, in which, in the or for the step (S1) of obtaining the object boxes (54) and/or the data characterizing the object boxes (54),

(S1a) a field of view (50) of the underlying working device (1) is optically captured in two-dimensional and/or monocular form by recording temporally successive images, and
(S1b) at least one object (52) and an object box (54) assigned to the object (52) are determined in successively recorded images.

3. Operating assistance method (S) according to Claim 3, in which the following steps are performed - in particular in the specified order - for each time increment:

(I1) resetting or presetting the values to be calculated in accordance with the assignment rules

$$\text{Scaling}_{old} := \text{Scaling}_{new}$$
$$\text{BoxTranslationX}_{old} := \text{BoxTranslationX}_{new}$$
$$\text{BoxWidth}_{old} := \text{BoxWidth}_{new}$$
$$\text{BoxPositionLeft}_{old} := \text{BoxPositionLeft}_{new}$$
$$\text{BoxPositionRight}_{old} := \text{BoxPositionRight}_{new},$$

(I2) updating the scaling in accordance with the following assignment rule

$$\text{Scaling}_{new} := 1 / (2 - \text{Scaling}_{old})$$

(I3) updating the horizontal object box translation in accordance with the following assignment rule

$$\text{BoxTranslationX}_{new} := \text{BoxTranslationX}_{old} \times \text{Scaling}_{old}$$

(I4) updating horizontal object box width in accordance with the following assignment rule

$$\text{BoxWidth}_{new} := \text{BoxPositionRight}_{old} - \text{BoxPositionLeft}_{old}$$

(I5) predicting the horizontal box positions in accordance with the following assignment rules

$$\text{BoxPositionLeft}_{new} := \text{BoxPositionLeft}_{old} + \text{BoxTranslationX}_{new} - 0.5 \times \text{BoxWidth}_{new} \times (\text{Scaling}_{new} - 1)/\text{Scaling}_{new}$$

$$\text{BoxPositionRight}_{new} := \text{BoxPositionRight}_{old} + \text{BoxTranslationX}_{new} + 0.5 \times \text{BoxWidth}_{new} \times (\text{Scaling}_{new} - 1) / \text{Scaling}_{new},$$

wherein $\text{Scaling}_{old}$, $\text{Scaling}_{new}$ denote the old and new scaling of an object box (54), $\text{BoxTranslationX}_{old}$, $\text{BoxTranslationX}_{new}$ denote the old and new displacement of an object box (54), $\text{BoxWidth}_{old}$, $\text{BoxWidth}_{new}$ denote the old and new width of an object box (54), $\text{BoxPositionLeft}_{old}$, $\text{BoxPositionLeft}_{new}$ denote the old and new position of the lower left corner of an object box (54) as a first x-coordinate of the respective object box (54) and BoxPositionRight$_{old}$, BoxPositionRight$_{new}$ denote the old and new position of the lower right corner of an object box (54) as a second x-coordinate of the respective object box (54) or their values.

4. Operating assistance method (S) according to one of the preceding claims, in which the following calculation rule is implemented to ascertain a new box position:

$$\text{BoxPositionLeft}_{new} := (\text{BoxPositionLeft}_{current} + \text{BoxSpeedLeft}_{current} * T_{prediction}) / (1 + \text{NormSpeed}_{current} * T_{prediction})$$

$$\text{BoxPositionRight}_{new} := (\text{BoxPositionRight}_{current} + \text{BoxSpeedRight}_{current} * T_{prediction}) / (1 + \text{NormSpeed}_{current} * T_{prediction})$$

   wherein BoxPositionLeft$_{new}$ and BoxPositionLeft$_{current}$ and BoxPositionRight$_{new}$ and BoxPositionRight$_{current}$ are the new and current position of the left and right box edge and BoxSpeedLeft$_{current}$ and BoxSpeedRight$_{current}$ are the currently measured angular speed of the left and right box edge and NormSpeed$_{current}$ is the currently measured so-called normalized box speed and T$_{prediction}$ is the prediction time associated with the prediction time step, where NormSpeed$_{current}$ is derived from the calculated scaling change of the object box.

5. Operating assistance method (S) according to one of the preceding claims, in which the value of a criticality determined for an object (52) is reduced by the proportion by which the object box (55) predicted for the object (52) has its width positioned outside the underlying image or the specified section.

6. Operating assistance method (S) according to one of the preceding claims, in which an object (52) on which a predicted object box (55) is based is determined as being non-critical with regard to a possible collision, in particular with a criticality with a value of 0%, if the predicted object box (55) is located completely outside an underlying image or a specified section thereof.

7. Operating assistance method (S) according to one of the preceding claims, in which a pedestrian (52') is ascertained as object (52), the position and movement of the pedestrian (52') as object (52) are examined and assessed on the basis of a pedestrian model, an acceleration capability of the pedestrian (52') as object (52) is determined on the basis of a speed ascertained for the pedestrian (52') and the criticality for the pedestrian (52') as object (52) is determined on the basis of the speed and the acceleration capability, wherein, in particular on the basis of the acceleration capability, an object box (56) enclosing the predicted object box (55) or encompassing it at least laterally or horizontally is generated and taken as a basis for the assessment of the criticality.

8. Control unit (10) for an operating assistance system (100) of a working device (1) and in particular of a vehicle, configured to control and/or run an operating assistance method (S) according to one of the preceding claims and/or to operate an underlying operating assistance system (100) in accordance with an operating assistance method (S) according to one of the preceding claims.

9. Operating assistance system (100) for a working device (1) and in particular for a vehicle, configured to carry out an operating assistance method (S) according to one of the preceding claims and having a control unit (10) according to Claim 8 for this purpose.

10. Working device (1), having an operating assistance system (100) according to Claim 9 and designed in particular as a vehicle, motor vehicle or passenger car.

11. Use of the operating assistance method (S) according to one of Claims 1 to 7, of the control unit (10) according to Claim 8, of the operating assistance system (100) according to Claim 9 and/or of the working devices (1) according to Claim 10 for pedestrian protection, cyclist protection, ACC and/or avoidance systems or methods.


**Revendications**

1. Procédé (S) d'assistance au fonctionnement pour un dispositif de travail (1), dans lequel

(S1) on obtient des boîtes d'objets (54) concernant un objet (52) dans un champ de vision du dispositif de travail (1) à des moments successifs ou des données caractérisant de telles boîtes d'objets (54),

(52) depuis des boîtes d'objets (54) d'un objet donné (52) jusqu'à des images prises consécutivement ou directement les unes après les autres, on détermine un changement d'échelle momentané ou des grandeurs qui en sont dérivées d'une boîte d'objet (54) par rapport à l'objet (52) respectif et un changement de position latérale momentané de la boîte d'objet dans l'image (54) par rapport à l'objet respectif (52),

(53) une boîte d'objet pronostiquée (55) dans l'avenir est déterminée à partir du changement d'échelle momentané ou de grandeurs qui en sont dérivées et du changement de position latérale momentané dans l'image par rapport à une boîte d'objet (54) vers un objet respectif (52), une boîte d'objet pronostiquée (55) dans l'avenir étant déterminée au moins par rapport à une image actuellement saisie en dernier, en déterminant et en actualisant de manière itérative, sur une pluralité d'incréments de temps jusqu'à une période de pronostic, des valeurs pour la mise à l'échelle d'une boîte d'objet (54) respective, pour les coordonnées d'une boîte d'objet (54) respective, pour la translation d'une boîte d'objet (54) respective et pour la largeur latérale d'une boîte d'objet (54) respective,

(54) la position de la boîte d'objet pronostiquée (55) et/ou le rapport entre une extension latérale de la boîte d'objet pronostiquée (55) et une extension latérale d'un champ de vision capturé (50) et/ou des images prises ou d'une partie de celles-ci sont déterminés et évalués, et

(S5) en fonction du résultat de l'évaluation, (i) il est déterminé si un objet (52) sur lequel est basée la boîte à objet pronostiquée (55) est critique ou non à l'égard d'une collision possible, et (ii) on commande ou on règle un état de fonctionnement du dispositif de travail (1),

un objet (52) sur lequel est basée une boîte d'objet pronostiquée (55) étant déterminé comme étant critique à l'égard d'une collision possible, en particulier avec une criticité ayant une valeur de 100%, lorsque la proportion de la largeur de la boîte d'objet pronostiquée (55) par rapport à la largeur de l'image sous-jacente ou de la partie prédéterminée de celle-ci dépasse une première valeur de seuil prédéterminée.

2. Procédé (S) d'assistance au fonctionnement selon la revendication 1, dans lequel, à l'étape ou pour l'étape (S1) d'obtention des boîtes d'objets (54) et/ou des données caractérisant les boîtes d'objets (54)

(S1a) un champ de vision (50) du dispositif de travail (1) sous-jacent est détecté optiquement en deux dimensions et/ou de manière monoculaire en prenant des images successives dans le temps et
(S1b) au moins un objet (52) et une boîte d'objet (54) associée à l'objet (52) sont déterminés dans des images enregistrées successives.

3. Procédé (S) d'assistance au fonctionnement selon la revendication 3, dans lequel, pour chaque incrément de temps, on effectue les étapes suivantes - notamment dans l'ordre indiqué :

(11) réinitialisation ou prédéfinition des valeurs à calculer selon les règles d'affectation

$$\text{Skalierung}_{alt} := \qquad \text{Skalierung}_{neu}$$
$$\text{BoxTranslationX}_{alt} := \qquad \text{BoxTranslationX}_{neu}$$
$$\text{BoxBreite}_{alt} := \qquad \text{BoxBreite}_{neu}$$
$$\text{BoxPositionLinks}_{alt} := \qquad \text{BoxPositionLinks}_{neu}$$
$$\text{BoxPositionRechts}_{alt} := \qquad \text{BoxPositionRechts}_{neu},$$

(I2) Actualisation de la mise à l'échelle selon la règle d'affectation suivante

$$\text{Skalierung}_{neu} := \qquad 1 \, / \, (2 - \text{Skalierung}_{alt})$$

(I3) Actualisation de la translation horizontale de la boîte d'objet selon la règle d'affectation suivante

$$\text{BoxTranslationX}_{neu} := \qquad \text{BoxTranslationX}_{alt} \times \text{Skalierung}_{alt}$$

(I4) Actualisation de la largeur de boîte d'objet horizontale selon la règle d'affectation suivante

$$\text{BoxBreite}_{neu} := \text{BoxPositionRechts}_{alt} - \text{BoxPositionLinks}_{alt}$$

(I5) Prédiction des positions de boîte horizontales selon les règles d'affectation suivantes

$\text{BoxPositionLinks}_{neu} := \text{BoxPositionLinks}_{alt} + \text{BoxTranslationX}_{neu} - 0.5 \times \text{BoxBreite}_{neu} \times (\text{Skalierung}_{neu} - 1) / \text{Skalierung}_{neu}$

$\text{BoxPositionRechts}_{neu} := \text{BoxPositionRechts}_{alt} + \text{BoxTranslationX}_{neu} + 0.5 \times \text{BoxBreite}_{neu} \times (\text{Skalierungneu} - 1) / \text{Skalierung}_{neu}$,

Skalierung$_{alt}$, Skalierung$_{neu}$ étant respectivement l'ancienne et la nouvelle échelle d'une boîte d'objet (54), BoxTranslationX$_{alt}$, BoxTranslationX$_{neu}$ étant respectivement l'ancienne et la nouvelle translation d'une boîte d'objet (54), BoxBreite$_{alt}$, BoxBreite$_{neu}$ étant respectivement l'ancienne et la nouvelle largeur d'une boîte d'objet (54), BoxPositionLinks$_{alt}$, BoxPositionLinks$_{neu}$ désignant l'ancienne ou la nouvelle position du coin inférieur gauche d'une boîte d'objet (54) en tant que première coordonnée x de la boîte d'objet (54) correspondante et BoxPositionRechts$_{alt}$, BoxPositionRechtSneu désignent l'ancienne ou la nouvelle position du coin inférieur droit d'une boîte d'objet (54) en tant que deuxième coordonnée x de la boîte d'objet (54) correspondante ou ses valeurs.

4. Procédé (S) d'assistance au fonctionnement selon l'une des revendications précédentes, dans lequel la règle de calcul suivante est appliquée pour déterminer une nouvelle position de boîte :

$\text{BoxPositionLinkS}_{neu} := (\text{BoxPositionLinks}_{aktuell} + \text{BoxGeschwindigkeitLinks}_{aktuell} * T_{Prädiktion}) / (1 + \text{NormGeschwindigkeit}_{aktuell} * T_{Prädiktion})$

$\text{BoxPositionRechtS}_{neu} := (\text{BoxPositionRechts}_{aktuell} + \text{BoxGeschwindigkeitRechts}_{aktuell} * T_{Prädiktion}) / (1 + \text{NormGeschwindigkeit}_{aktuell} * T_{Prädiktion})$

BoxPositionLinks$_{neu}$ und BoxPositionLinks$_{aktuell}$ ou BoxPositionRechts$_{neu}$ und Box Position Rechts$_{aktuell}$ sont respectivement la nouvelle position et la position actuelle du bord gauche et du bord droit de la boîte, et BoxGeschwindigkeitLinks$_{aktuell}$ et BoxGeschwindigkeitRechts$_{aktuell}$ sont respectivement la vitesse angulaire actuellement mesurée du bord gauche et du bord droit de la boîte, et NormGeschwindigkeit$_{aktuell}$ est la vitesse de boîte dite normalisée actuellement mesurée, et T$_{Prädiktion}$ est le temps de prédiction associé au pas de temps de prédiction, la NormGeschwindigkeit$_{aktuell}$ étant dérivée du changement d'échelle calculé de la boîte objet.

5. Procédé (S) d'assistance au fonctionnement selon l'une des revendications précédentes, dans lequel la valeur d'une criticité déterminée pour un objet (52) est réduite de la proportion avec laquelle la boîte d'objet pronostiquée (55) pour l'objet (52) est positionnée dans sa largeur en dehors de l'image de base ou de la section prédéfinie.

6. Procédé (S) d'assistance au fonctionnement selon l'une des revendications précédentes, dans lequel un objet (52) sur lequel se base une boîte d'objet pronostiquée (55) est déterminé comme étant non critique à l'égard d'une collision possible, en particulier avec une criticité ayant une valeur de 0%, lorsque la boîte d'objet pronostiquée (55) est entièrement située en dehors d'une image sous-jacente ou d'une section prédéterminée de celle-ci.

7. Procédé (S) d'assistance au fonctionnement selon l'une des revendications précédentes, dans lequel un piéton (52') est déterminé comme objet (52), la position et le mouvement du piéton (52') sont examinés et évalués comme objet (52) sur la base d'un modèle de piéton, une capacité d'accélération du piéton (52') en tant qu'objet (52) est déterminée sur la base d'une vitesse déterminée pour le piéton (52') et la criticité pour le piéton (52') en tant qu'objet (52) est déterminée sur la base de la vitesse et de la capacité d'accélération, une boîte d'objet (56), enveloppant la boîte d'objet pronostiquée (55) ou l'entourant au moins latéralement ou horizontalement, étant générée en particulier sur la base de la capacité d'accélération et étant prise comme base lors de l'évaluation de la criticité.

8. Unité de commande (10) pour un système (100) d'assistance au fonctionnement d'un dispositif de travail (1) et notamment d'un véhicule, qui est agencée de façon à commander un procédé (S) d'assistance au fonctionnement selon l'une des revendications précédentes, pour le laisser se dérouler et/ou pour exploiter un système (100) d'assistance au fonctionnement sous-jacent selon un procédé (S) d'assistance au fonctionnement selon l'une des revendications précédentes.

9. Système (100) d'assistance au fonctionnement pour un dispositif de travail (1) et notamment pour un véhicule, qui est agencé de façon à mettre en oeuvre un procédé (S) d'assistance au fonctionnement selon l'une des revendications précédentes et qui comporte à cet effet une unité de commande (10) selon la revendication 8.

10. Dispositif de travail (1) qui présente un système (100) d'assistance au fonctionnement selon la revendication 9 et qui est notamment sous la forme d'un véhicule, d'un véhicule automobile ou d'une voiture particulière.

11. Utilisation du procédé (S) d'assistance au fonctionnement selon l'une des revendications 1 à 7, de l'unité de commande (10) selon la revendication 8, du système (100) d'assistance au fonctionnement selon la revendication 9 et/ou des dispositifs de travail (1) selon la revendication 10 pour la protection des piétons, pour la protection des cyclistes, pour l'ACC et/ou pour des systèmes ou procédures d'évitement.

FIG. 1

FIG. 2

EP 3 803 679 B1

FIG. 3

EP 3 803 679 B1

18

FIG. 4

EP 3 803 679 B1

**FIG. 5**

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SCHRIFT KELLER ; CHRITOPH G et al.** Will the Pedestrian Cross? A Study on Pedestrian Path Prediction. *IEEE TRANS ON INTELLIGENT TRANSPORTATION SYSTEMS,* April 2014, vol. 15 (2), ISSN 1524-9050, 494-506

- **JUNFENG, GE et al.** Real-Time Pedestrian Detection and Tracking at Nighttime for Driver-Assistance Systems. *IEEE TRANS ON INTELLIGENT TRANSPORTATION SYSTEMS,* Juni 2009, vol. 10 (2), ISSN 1524-9050, 283-298